# EUROPÄISCHE PATENTANMELDUNG

(11) **EP 3 460 973 A1**
(43) Veröffentlichungstag der Anmeldung: **27.03.2019**
(21) Anmeldenummer: 17193061.3
(22) Anmeldetag: 26.09.2017
(51) Int. Cl.: H02M 3/156, H02M 3/158

(54) **VERFAHREN ZUM BETRIEB EINES GLEICHSPANNUNGSWANDLERS MIT MEHREREN LEISTUNGSTEILZWEIGEN**

(71) Anmelder: Siemens Aktiengesellschaft, 80333 München (DE)
(72) Erfinder: Damec, Vladislav, 691 43 Hlohovec (CZ); Hörist, Gerald, 1220 Wien (AT); Pürstl, Gerrit, 1090 Wien (AT); Trnka, Alexander, 2201 Gerasdorf bei Wien (AT)
(74) Vertreter: Maier, Daniel Oliver

(57) **Zusammenfassung**

Die Erfindung betrifft ein Verfahren zum Betrieb eines Gleichspannungswandlers mit mehreren Leistungsteilzweigen (3,5,7-10; 4,6,11-14) sowie eine entsprechende Vorrichtung. Um einen stabilen Betrieb des Gleichspannungswandlers ohne leistungsfähige Mikrokontroller zu ermöglichen, ist vorgesehen, dass die Leistungsteilzweige mittels Zweipunktregler geregelt werden und die Zweipunktregler unterschiedlicher Leistungsteilzweige miteinander synchronisiert werden.

## Beschreibung

### Technisches Gebiet

Die Erfindung betrifft ein Verfahren zum Betrieb eines Gleichspannungswandlers mit mehreren Leistungsteilzweigen, sowie eine entsprechende Vorrichtung zur Durchführung des Verfahrens.

Gleichspannungswandler werden auch als DC-DC-Konverter bezeichnet und umfassen wenigstens ein Schaltelement, welches mittels einer Steuereinrichtung mit einem veränderbaren Tastverhältnis zyklisch ein- und ausgeschaltet wird, wobei eine Eingangsspannung in eine Ausgangsspannung umgewandelt wird, indem durch Auf- und Abmagnetisieren einer Induktivität ein Kondensator geladen wird.

Gleichspannungswandler sind in unterschiedlichen Ausführungen bekannt und dienen der Umwandlung einer EingangsGleichspannung in eine höhere oder tiefere AusgangsGleichspannung. Man unterscheidet deshalb zwei Grundfunktionen, nämlich einen Hochsetzmodus und einen Tiefsetzmodus. Zur Einstellung einer gewünschten Ausgangsspannung wird wenigstens ein Schaltelement mit einem entsprechenden Tastverhältnis angesteuert. Dieses Tastverhältnis bestimmt das Verhältnis der Einschaltdauer zu Ausschaltdauer bzw. Periodendauer während eines Schaltzyklus.

Mittels des oder der Schaltelemente des Gleichspannungswandlers, welche z.B. als Halbleiterschalter, etwa IGBTs oder MosFETs, ausgebildet sind, ist also zyklisch zumindest ein aktiver Energiespeicher, wie eine Induktivität (z.B. Spule oder Wandler-Transformator), aufladbar und entladbar.

### Stand der Technik

Wesentlich bei Gleichspannungswandlern ist die Güte der Regelung des Stroms, ein wichtiger Parameter dabei ist die Dynamik der Stromregelung. Werden herkömmliche PID-Regler in Verbindung mit günstigen Mikrokontrollern verwendet, kann es wegen Rechenzeitüberlastung zu Instabilitäten des Reglers kommen. Beispielsweise kann es passieren, dass der Stromregler nicht - wie es notwendig wäre - jeden Takt berechnet, sondern z.B. nur jeden zweiten Takt.

Eine hohe Dynamik ist gerade bei Gleichspannungswandlern mit großer Leistung, also einer Leistung > 1 kW, erforderlich, bei denen mehrere Leistungsteilzweige, sogenannte Phasen, den Strom phasenversetzt führen.

Die Stromregelung wurde bisher durch hochwertige, also leistungsfähige, Mikrokontroller gelöst, deren Entwicklung aufwändig ist. Für den Betreiber des Gleichspannungswandlers, der meist nicht über die Kenntnisse eines Entwicklers von Reglern verfügt, ist es folglich schwer, geeignete Einstellungen des Reglers zu finden, um einen stabilen Betrieb des Gleichspannungswandlers zu garantieren.

### Darstellung der Erfindung

Es ist eine Aufgabe der vorliegenden Erfindung, ein Verfahren zum Betrieb eines Gleichspannungswandlers mit mehreren Leistungsteilzweigen zur Verfügung zu stellen, welches ohne leistungsfähige Mikrokontroller auskommt und dennoch einen stabilen Betrieb des Gleichspannungswandlers ermöglicht.

Diese Aufgabe wird durch Verfahren mit den Merkmalen des Patentanspruchs 1 gelöst. Vorteilhafte Ausgestaltungen der Erfindung sind in den jeweiligen abhängigen Ansprüchen definiert.

Gemäß Anspruch 1 ist vorgesehen, dass die Leistungsteilzweige mittels Zweipunktregler geregelt werden und die Zweipunktregler unterschiedlicher Leistungsteilzweige miteinander synchronisiert werden.

Der oder die Zweipunktregler eines Leistungsteilzweigs legen die Schaltzeitpunkte der Schaltelemente fest. Unter Synchronisierung der Zweipunktregler wird hier verstanden, dass der Strom des ersten Leistungsteilzweigs die gleiche Frequenz wie der Strom eines zweiten Leistungsteilzweigs hat, sowie eine festgelegte Phasenverschiebung zum Strom des zweiten Leistungsteilzweigs. Die Frequenz des Stroms in einem Leistungsteilzweig entsteht durch die Schaltfrequenz der Schaltelemente.

Zweipunktregler zeichnen sich durch hohe Dynamik und Stabilität aus. Die durch einen Zweipunktregler verursachte Stromwelligkeit hebt sich durch die Verwendung mehrerer synchronisierter Leistungsteilzweige fast vollständig auf.

Ein Zweipunktregler hat zwei Ausgangszustände. Je nachdem, ob ein Istwert der Eingangsgröße über oder unter einem Sollwert liegt, wird der obere oder der untere Ausgangszustand eingenommen. Bei starken Änderungen der Eingangsgröße kann der Zweipunktregler Regelabweichungen schneller ausregeln als es mit anderen Regelverfahren möglich ist. Bei der vorliegenden Erfindung bewirkt der Zweipunktregler, dass ein bestimmtes Schaltelement, nämlich ein Tiefsetz-Schaltelement und/oder ein Hochsetz-Schaltelement, eingeschaltet und ausgeschaltet wird.

Um eine ständige Schwingung des Ausgangszustands zu vermeiden, haben Zweipunktregler meist eine Hysterese voreingestellt, d. h. einen gewissen Totbereich um den Sollwert (Schwellwert), um den sich der Istwert ändern muss, um ein Umschalten in den gegenteiligen Ausgangszustand zu bewirken. Für die vorliegende Erfindung bedeutet dies, dass der Zweipunktregler ein bestimmtes Schaltelement bei einem vorgegebenen Stromwert einschaltet und bei einem anderen Stromwert ausschaltet.

Eine einfache Ausführungsform der Erfindung bezieht sich darauf, dass die Zweipunktregler mittels Phasenregelschleife miteinander synchronisiert werden.

Eine Phasenregelschleife (phase-locked loop, PLL) ist eine elektronische Schaltungsanordnung, die die Phasenlage und damit zusammenhängend die Frequenz eines der Zweipunktregler (seines Stromverlaufs über die Zeit) über einen geschlossenen Regelkreis so beeinflusst, dass die Phasenabweichung eines anderen Zweipunktreglers relativ dazu (seines Stromverlaufs über die Zeit) möglichst konstant ist. Die Phasenregelschleife bestimmt also die Phasendifferenz zwischen den Signalen zweier Zweipunktregler und diese Phasendifferenz korrigiert die Frequenz eines der Signale.

Die Frequenz eines der Zweipunktregler bzw. des Stroms, der in einem Leistungsteilzweig durch das Schalten der Schaltelemente entsteht, kann einfach durch die Verstellung der Hysterese des Zweipunktreglers eingestellt werden. Insofern besteht eine Ausführungsform der Erfindung darin, dass bei der Synchronisierung die Hysterese von zumindest einem Zweipunktregler verändert wird. Für diese Ausführungsform der Erfindung muss der Zweipunktregler somit jedenfalls eine Hysterese aufweisen.

Insbesondere kann dabei vorgesehen werden, dass die Hysterese des Zweipunktreglers eines ersten Leistungsteilzweigs konstant gehalten wird, während die Hysterese des Zweipunktreglers von zumindest einem weiteren Leistungsteilzweig so eingestellt wird, dass der Stromverlauf des weiteren Leistungsteilzweigs phasenverschoben zum Stromverlauf des ersten Leistungsteilzweigs ist.

Eine vorteilhafte Ausführungsform sieht vor, dass für zumindest einen bestimmten Leistungsteilzweig die Schaltschwelle des Zweipunktreglers für das Tiefsetzen gegenüber einer Schaltschwelle des Zweipunktreglers für das Hochsetzen um einen Stromschwellenversatz versetzt ist. Jede Schaltschwelle mit Hysterese wird grundsätzlich durch einen oberen und einen unteren Stromschwellwert festgelegt. In der Regel werden gegebenenfalls für alle Leistungsteilzweige die Schaltschwellen des Zweipunktreglers für das Tiefsetzen gegenüber den Schaltschwellen des Zweipunktreglers für das Hochsetzen um einen Strombetrag versetzt sein.

Insbesondere soll die Schwelle für das Einschalten des Tiefsetz-Stellers über der Schwelle für das Einschalten des Hochsetz-Stellers liegen. Da die Hysterese für das Tiefsetzen und für das Hochsetzen in der Regel gleich groß sein wird, folgt in diesem Fall, dass die Schwelle für das Ausschalten des Tiefsetz-Stellers über der Schwelle für das Ausschalten des Hochsetz-Stellers liegt.

Eine Vorrichtung zur Durchführung des erfindungsgemäßen Verfahrens umfasst einen Gleichspannungswandler mit mehreren Leistungsteilzweigen und zumindest zwei Zweipunktreglern. Die Vorrichtung ist dadurch gekennzeichnet, dass die Zweipunktregler unterschiedlicher Leistungsteilzweige über eine Synchronisierungseinrichtung miteinander verbunden sind.

Die Synchronisierungseinrichtung kann zum Zweck der Synchronisierung der Zweipunktregler eine Phasenregelschleife enthalten.

Die Synchronisierungseinrichtung kann so ausgebildet sein, dass bei der Synchronisierung eine Hysterese von zumindest einem Zweipunktregler verändert wird.

Insbesondere kann die Synchronisierungseinrichtung so ausgebildet sein, dass die Hysterese des Zweipunktreglers eines ersten Leistungsteilzweigs konstant gehalten wird, während die Hysterese des Zweipunktreglers von zumindest einem weiteren Leistungsteilzweig so eingestellt wird, dass der Stromverlauf des weiteren Leistungsteilzweigs phasenverschoben zum Stromverlauf des ersten Leistungsteilzweigs ist.

Es kann weiters bei einer erfindungsgemäßen Vorrichtung vorgesehen sein, dass für zumindest einen bestimmten Leistungsteilzweig eine Hysterese des Zweipunktreglers für das Tiefsetzen gegenüber einer Hysterese des Zweipunktreglers für das Hochsetzen versetzt ist.

Durch die vorliegende Erfindung kann eine Stromregelung eines Gleichspannungswandlers erreicht werden, die im Vergleich zu Regelungen mit Mikrokontrollern technisch weniger aufwändig und daher kostengünstiger ist. Mit der Erfindung können sogar die Regelungsparameter wie die Zeit für die Anregelung und die Genauigkeit verbessert werden. Vor allem die Anregelzeiten können mit dem Zweipunktregler verbessert werden, wobei sich der Zweipunktregler aufgrund seines Regelprinzips als sehr robust gegen eine Überschwingen oder ein Unterschwingen der Prozessgrößen auswirkt.

Der phasenverschobene Stromverlauf der parallelen Leistungsteilzweige ergibt keine oder nur eine sehr geringe Stromwelligkeit am Ausgang des Gleichspannungswandlers.

### Kurzbeschreibung der Figuren

Zur weiteren Erläuterung der Erfindung wird im nachfolgenden Teil der Beschreibung auf die Figuren Bezug genommen, aus der weitere vorteilhafte Ausgestaltungen, Einzelheiten und Weiterbildungen der Erfindung zu entnehmen sind. Es zeigen:
Figur 1 einen schematisch dargestellten Gleichspannungswandler nach dem Stand der Technik,
Figur 2 zeigt den Stromverlauf über die Zeit für einen Leistungsteilzweig,
Figur 3 zeigt den Stromverlauf bei Synchronisierung des Zweipunktreglers mittels PLL,
Figur 4 einen Schaltplan für eine erfindungsgemäße Schaltung mit Zweipunktregler.

### Ausführung der Erfindung

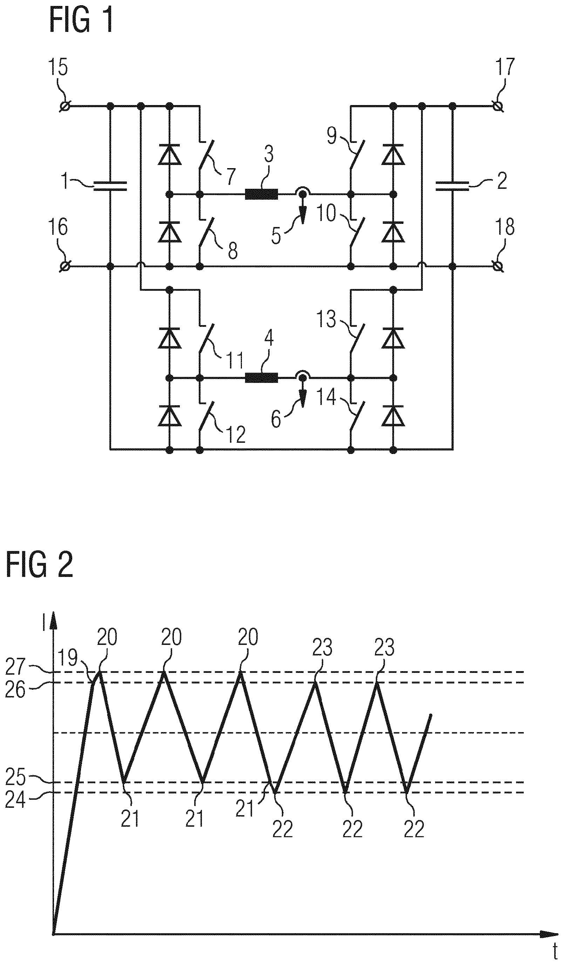

In Fig. 1 ist ein Gleichspannungswandler mit zwei Spannungszwischenkreisen gemäß Stand der Technik dargestellt. Der Gleichspannungswandler umfasst in seiner Grundschaltung einen beiden Leistungsteilzweigen gemeinsamen Eingangskondensator 1 und einen beiden Leistungsteilzweigen gemeinsamen Ausgangskondensator 2, wobei dem Eingangskondensator 1 eine erste Leistungsschnittstelle 15, 16 zugeordnet ist, dem Ausgangskondensator 2 eine zweite Leistungsschnittstelle 17, 18.

Jeder Leistungsteilzweig umfasst weiters einen Hoch- und Tiefsetzer (Auf- und Abwärtswandler) für beide Stromrichtungen. Der erste, in Fig. 1 obere, Leistungsteilzweig besteht aus einer Induktivität 3 als aktivem Energiespeicher, einem Tiefsetz-Schaltelement 7, einem Hochsetz-Schaltelement 10, einem Tiefsetz-Schaltelement 9 und einem Hochsetz-Schaltelement 8. Der zweite, in Fig. 1 untere, Leistungsteilzweig besteht aus einer Induktivität 4 als aktivem Energiespeicher, einem Tiefsetz-Schaltelement 11, einem Hochsetz-Schaltelement 14, einem Tiefsetz-Schaltelement 13 und einem Hochsetz-Schaltelement 12. Zu jedem Schaltelement ist in an sicher bekannter Weise eine Diode parallelgeschaltet.

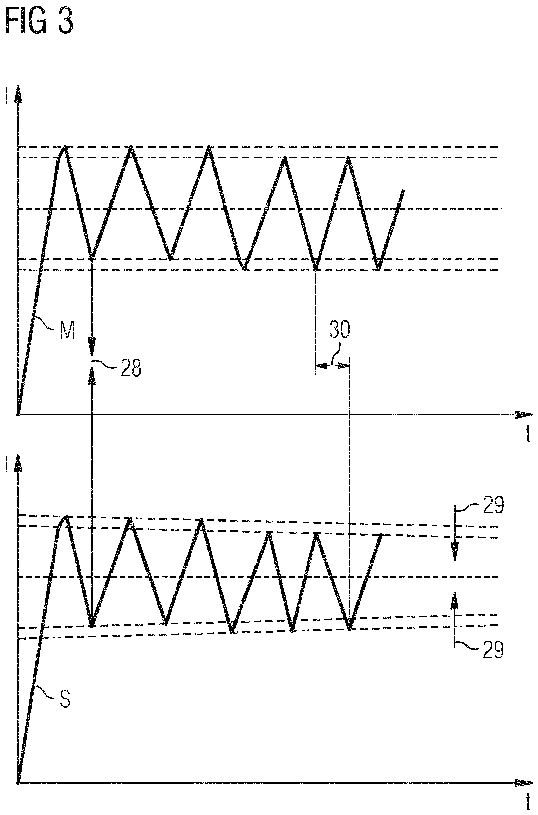

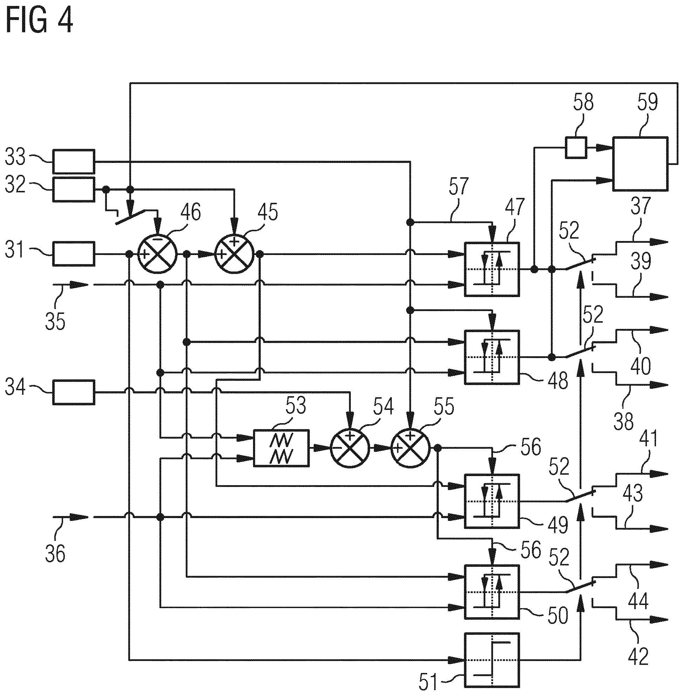

Es ist die Prozessgröße Strom zu regeln, wozu erfindungsgemäß z.B. die Regelgröße 5, nämlich der Strom-Istwert des Drosselstroms, auf die Regelgröße 6, nämlich den Strom-Istwert des Drosselstroms, geregelt, nämlich hier synchronisiert, werden muss. Es gibt eine Regelgröße pro Leistungsteilzweig. Die Regelgrößen 5 und 6 werden der in Fig. 4 dargestellten Schaltung als Istwert 35 des Kanals 1 und als Istwert 35 des Kanals 2 zugeführt. Die Regelgrößen 5 und 6 sind auch in Fig. 3 als Master M und Slave S dargestellt.

Die Hochsetz- und Tiefsetz-Schaltelemente 7-14 sind hier symbolisch als einfache Schalter mit parallel geschalteten Dioden dargestellt. Sie können in der Praxis selbstverständlich auch auf andere Weise, etwa mittels elektronischer Schaltelemente, wie Transistoren, verwirklicht werden.

Der hier dargestellte Gleichspannungswandler kann in allen vier Quadranten arbeiten. Die Erfindung kann aber auch auf Gleichspannungswandler angewendet werden, die nur in einem oder zwei Quadranten arbeiten können. Die Erfindung kann folglich auch auf Gleichspannungswandler mit mehreren Leistungsteilzweigen angewendet werden,
wo ein Leistungsteilzweig nur ein Hochsetz-Schaltelement 8 bzw. 12 aufweist,
wo ein Leistungsteilzweig nur ein Hochsetz-Schaltelement 10 bzw. 14 aufweist,
wo ein Leistungsteilzweig nur ein Tiefsetz-Schaltelement 7 bzw. 11 aufweist,
wo ein Leistungsteilzweig nur ein Tiefsetz-Schaltelement 9 bzw. 13 aufweist,
wo ein Leistungsteilzweig nur ein Tiefsetz-Schaltelement 7 bzw. 11 und ein Hochsetz-Schaltelement 10 bzw. 14 aufweist,
wo ein Leistungsteilzweig nur ein Tiefsetz-Schaltelement 9 bzw. 13 und ein Hochsetz-Schaltelement 8 bzw. 12 aufweist.

Wenn der Gleichspannungswandler in Fig. 1 von links nach rechts - also in positiver Stromrichtung - als Abwärtswandler (Tiefsetzer) arbeitet, etwa, wenn eine an der Leistungs-Schnittstelle 17, 18 angeschlossene Batterie geladen werden soll, wird im ersten Leistungsteilzweig nur das Tiefsetz-Schaltelement 7 getaktet (eingeschaltet), das Hochsetz-Schaltelement 10 ist dauernd eingeschaltet, das Hochsetz-Schaltelement 8 und das Tiefsetz-Schaltelement 9 bleiben ausgeschaltet. Ebenso wird im zweiten Leistungsteilzweig nur das Tiefsetz-Schaltelement 11 getaktet (eingeschaltet), das Hochsetz-Schaltelement 14 bleibt dauernd eingeschaltet, das Hochsetz-Schaltelement 12 und das Tiefsetz-Schaltelement 13 bleiben ausgeschaltet.

Soll der Gleichspannungswandler in Fig. 1 in positiver Stromrichtung als Aufwärtswandler (Hochsetzer) arbeiten, wird im ersten Leistungsteilzweig nur das Hochsetz-Schaltelement 10 getaktet (eingeschaltet), das Tiefsetz-Schaltelement 7 ist dabei dauernd eingeschaltet und die übrigen Schaltelemente 9, 8 bleiben ausgeschaltet. Ebenso wird im zweiten Leistungsteilzweig nur das Hochsetz-Schaltelement 14 getaktet (eingeschaltet), das Tiefsetz-Schaltelement 11 ist dabei dauernd eingeschaltet und die übrigen Schaltelemente 13, 12 bleiben ausgeschaltet.

Soll der Gleichspannungswandler in negativer Stromrichtung arbeiten, so sind die Schaltelemente in analoger Weise geschaltet: soll etwa der Gleichspannungswandler in Fig. 1 in negativer Stromrichtung als Abwärtswandler arbeiten, wird im ersten Leistungsteilzweig nur das Tiefsetz-Schaltelement 9 getaktet (eingeschaltet), das Hochsetz-Schaltelement 10 und das Tiefsetz-Schaltelement 7 bleiben ausgeschaltet. Ebenso wird im zweiten Leistungsteilzweig nur das Tiefsetz-Schaltelement 13 getaktet (eingeschaltet), das Hochsetz-Schaltelement 14 und das Tiefsetz-Schaltelement 11 bleiben ausgeschaltet.

In Fig. 2 ist der idealisierte Stromverlauf über die Zeit für die Stromregelung des Gleichspannungswandlers dargestellt. Der Strom ist für die Regelung des Gleichspannungswandlers eine Prozessgröße. Die Funktion der Stromregelung wird anhand von Fig. 2 erläutert. Nach dem Start der Stromregelung sind die entsprechenden Schaltelemente 7-14 eingeschaltet und der Strom steigt, bis er die Stromschwelle Hochsetzsteller-AUS 26 erreicht. Das für das Hochsetzen bestimmte Schaltelement - je nach Stromrichtung die beiden Hochsetz-Schaltelemente 8,12 oder 10,14 - wird bei Erreichen der Stromschwelle Hochsetzsteller-AUS 26 ausgeschaltet, hier bei Punkt 19. Steigt der Strom weiter, wird nach dem Erreichen der Stromschwelle Tiefsetzsteller-AUS 27 das für das Tiefsetzen bestimmte Schaltelement - je nach Stromrichtung die beiden Tiefsetz-Schaltelemente 7,11 oder 9,13 - bei Erreichen der Stromschwelle Tiefsetzsteller-AUS 27 ausgeschaltet, hier im Punkt 20. Der Strom sinkt, bis die Stromschwelle Tiefsetzsteller-EIN 25 im Punkt 21 erreicht wird. Dann wird das für das Tiefsetzen bestimmte Schaltelement - je nach Stromrichtung die beiden Tiefsetz-Schaltelemente 7,11 oder 9,13 - eingeschaltet. Der beschriebene Vorgang wiederholt sich so lange wie die Spannungsverhältnisse das Tiefsetzen verlangen. Der Strom I pendelt dabei immer zwischen den Stromschwellen Tiefsetzsteller-AUS 27 und Tiefsetzsteller-EIN 25.

Sollte der Betriebsmodus von Tiefsetzen auf Hochsetzen gewechselt werden, erfolgt dies durch den Zweipunktregler automatisch, wenn nach dem Einschalten des für das Tiefsetzen bestimmten Schaltelements - je nach Stromrichtung die beiden Tiefsetz-Schaltelemente 7,11 oder 9,13 - der Strom weiter sinkt, und die Stromschwelle Hochsetzsteller-EIN 24 erreicht, was hier erstmals in Punkt 22 der Fall ist. Nach Erreichen der Stromschwelle Hochsetzsteller-EIN 24 werden die für das Hochsetzen bestimmten Schaltelemente - je nach Stromrichtung die beiden Hochsetz-Schaltelemente 8,12 oder 10,14 - eingeschaltet und der Regelungsvorgang des Zweipunktreglers wiederholt sich periodisch. Dabei pendelt der Strom zwischen den Stromschwellen Hochsetzsteller-EIN 24 und Hochsetzsteller-AUS 26, letzteres ist immer in Punkt 23 der Fall.

Die Stromschwellen Hochsetzsteller-EIN 24 und Hochsetzsteller-AUS 26 bilden somit die Hysterese für den Zweipunktregler betreffend den Hochsetz-Modus, die Stromschwellen Tiefsetzsteller-EIN 25 und Tiefsetzsteller-AUS 27 bilden somit die Hysterese für den Zweipunktregler betreffend den Tiefsetz-Modus.

Der Stromschwellenversatz der beiden Stromschwellen Hochsetzsteller-EIN 24 und Tiefsetzsteller-EIN 25 zueinander, ebenso wie der Stromschwellenversatz der beiden Stromschwellen Hochsetzsteller-AUS 26 und Tiefsetzsteller-AUS 27 zueinander, kann kompensiert werden, z.B. mit einer Schaltung gemäß Fig. 4.

Für jeden Leistungsteilzweig wird eine eigene Stromregelung mit einem Zweipunktregler vorgesehen. Die Zweipunktregler unterschiedlicher Leistungsteilzweige müssen nun erfindungsgemäß synchron laufen. Zum Synchronisieren kann eine Phasenregelschleife, eine sogenannte phase-locked loop (PLL) verwendet werden, wodurch ein synchroner phasenversetzter Betrieb der Leistungsteilzweige erreichbar ist. Die Phasenregelschleife bestimmt also die Phasendifferenz zwischen den Signalen zweier Zweipunktregler und diese Phasendifferenz korrigiert die Frequenz eines der Signale. Die Frequenz eines der Zweipunktregler kann durch die Verstellung seiner Hysterese eingestellt werden. Die Funktionsweise der Phasenregelschleife ist in Fig. 3 dargestellt.

Gleich wie in Fig. 2 ist hier der Stromverlauf I eines Zweipunktreglers über die Zeit t dargestellt, und zwar in Fig. 3 oben für einen ersten Zweipunktregler, also einen Stromregler eines ersten Leistungsteilzweigs (z.B. des ersten Leistungsteilzweigs in Fig. 1 mit Induktivität 3, Tiefsetz-Schaltelement 7, 9, Hochsetz-Schaltelement 8,10). Der erste Zweipunktregler gibt die Frequenz und die Phase vor und wird daher als Master M bezeichnet. Der in Fig. 3 unten dargestellte Stromverlauf ist jener eines zweiten Zweipunktreglers, also eines Stromreglers eines zweiten Leistungsteilzweigs (z.B. des zweiten Leistungsteilzweigs in Fig. 1 mit Induktivität 4, Tiefsetz-Schaltelement 11,13, Hochsetz-Schaltelement 12,14). Der zweite Zweipunktregler folgt der Frequenz und der Phase des ersten Zweipunktreglers, des Masters M, und wird daher als Slave S bezeichnet.

Der Master M regelt mit konstanter Hysterese, das heißt, die mit unterbrochenen Linien dargestellten Stromschwellen (Hochsetzsteller-EIN 24, Tiefsetzsteller-EIN 25, Hochsetzsteller-AUS 26, Tiefsetzsteller-AUS 27 aus Fig. 2) bleiben über die Zeit t konstant. Der Slave S wird nachgestellt: durch die Verstellung der Hysterese 29 wird der gleichphasige Stromverlauf 28 auf einen gegenphasigen Stromverlauf 30 gestellt. Die Hysterese 29 wird hier verändert, indem die Schwellen Hochsetzsteller-EIN 24 und Tiefsetzsteller-EIN 25 zwar den gleichen Abstand zueinander behalten, aber angehoben werden, und die Schwellen Hochsetzsteller-AUS 26 und Tiefsetzsteller-AUS 27 abgesenkt werden, wobei sie ebenfalls den gleichen Abstand zueinander behalten.

Ein möglicher erfindungsgemäßer Zweipunktregler, der die in Fig. 3 beschriebene Funktion hat, ist in Fig. 4 dargestellt. Dieser Zweipunktregler ist für Gleichspannungswandler mit zwei zueinander parallelen Leistungsteilzweigen, also für zwei Phasen, ausgebildet. Die Phasen werden im Folgenden auch als Kanäle bezeichnet. Dieser Zweipunktregler bzw. der zugehörige Gleichspannungswandler kann in allen vier Quadranten des Energieflusses (Hochsetzen, Tiefsetzen, negative und positive Stromrichtung) arbeiten. Der Fachmann kann die dargestellte Schaltung auch für Gleichspannungswandler mit mehr als zwei Phasen und/oder mit weniger Quadranten des Energieflusses anpassen, wobei diese Varianten ebenfalls unter die Erfindung fallen.

Der Schaltung wird ein Stromsollwert 31 zugeführt, dessen Äquivalent die Summe der Drosselströme darstellt. Ebenso vorgegeben werden der Schaltung der Stromschwellenversatz 32 zwischen Hochsetzen und Tiefsetzen (entspricht dem Unterschied zwischen den Stromschwellen Hochsetzsteller-EIN 24 und Tiefsetzsteller-EIN 25 bzw. zwischen den Stromschwellen Hochsetzsteller-AUS 26 und Tiefsetzsteller-AUS 27), die Hysterese 33 des Stromreglers, der Sollwert 34 der Phasenverschiebung zwischen mehreren Kanälen, der Strom-Istwert 35 für Kanal 1 und der Strom-Istwert 36 für Kanal 2.

Dem Stromsollwert 31 wird die Sollwertkorrektur 46 für das Hochsetzen und Tiefsetzen zugeführt, wo der Stromschwellenversatz 32 zwischen Hochsetzen und Tiefsetzen abgezogen wird. Das Signal aus der Sollwertkorrektur 46 wird dem Komparator 48 für das Hochsetzen von Kanal 1 und dem Komparator 50 für das Hochsetzen des Kanals 2 zugeleitet.

Das Signal für den Stromschwellenversatz 32 zwischen Hochsetzen und Tiefsetzen wird auch einem Addierer 45 für den Stromschwellenversatz zwischen Hochsetzen und Tiefsetzen zugeführt, zur Summierung mit dem Wert aus der Sollwertkorrektur 46. Das Signal aus dem Addierer 45 wird dem Komparator 47 für das Tiefsetzen des Kanals 1 und dem Komparator 49 für das Tiefsetzen des Kanals 2 zugeleitet.

Der Strom-Istwert 35 für Kanal 1 wird dem Komparator 47 für das Tiefsetzen des Kanals 1, dem Komparator 48 für das Hochsetzen von Kanal 1 und dem Phasenkomparator 53 zugeleitet. Der Strom-Istwert 36 für Kanal 2 wird dem Komparator 49 für das Tiefsetzen des Kanals 2, dem Komparator 50 für das Hochsetzen von Kanal 2 und dem Phasenkomparator 53 zugeleitet. Der Phasenkomparator 53 vergleicht den Strom-Istwert 35 für Kanal 1 mit dem Strom-Istwert 36 für Kanal 2. Das Ergebnis dieses Vergleichs wird der Differenzbildung 54 zugeleitet, die daraus und aus dem Sollwert 34 der Phasenverschiebung zwischen mehreren Kanälen den Soll/Ist Unterschied der Phasenverschiebung bestimmt. Bei der Summierung 55 werden aus dem Soll/Ist Unterschied der Phasenverschiebung und der Hysterese 33 des Stromreglers die Hysterese von Kanal 2 bestimmt. Das daraus resultierende Signal für die Hysterese 56 für Kanal 2 wird dem Komparator 49 für das Tiefsetzen des Kanals 2 und dem Komparator 50 für das Hochsetzen des Kanals 2 zugeführt. Der Sollwert für die Hysterese 57 für Kanal 1 wird dem Komparator 47 für das Tiefsetzen des Kanals 1 und dem Komparator 48 für das Hochsetzen des Kanals 1 zugeführt.

Das Signal aus dem Komparator 47 für das Tiefsetzen des Kanals 1 wird einem Umschalter 52 für die Stromrichtung zugeleitet, der das Signal entweder dem Signal 37 für das Tiefsetzen von Kanal 1 in positiver Stromrichtung aufschaltet oder dem Signal 39 für das Tiefsetzen von Kanal 1 in negativer Stromrichtung. Das Signal aus dem Komparator 47 wird auch einem Inverter 58 zugeführt, dessen Ausgang auf ein RS Flipflop 59 geschaltet ist.

Das Signal aus dem Komparator 48 für das Hochsetzen des Kanals 1 wird einem Umschalter 52 für die Stromrichtung zugeleitet, der das Signal entweder dem Signal 38 für das Hochsetzen von Kanal 1 in negativer Stromrichtung oder dem Signal 40 für das Hochsetzen von Kanal 1 in positiver Stromrichtung aufschaltet. Das Signal aus dem Komparator 48 wird direkt dem RS Flipflop 59 zugeführt.

Das Signal aus dem RS Flipflop 59 wird dem Schalter zugeführt, der den Stromschwellenversatz 32 zwischen Hochsetzen und Tiefsetzen der Sollwertkorrektur 46 zuführt.

Das Signal aus dem Komparator 49 für das Tiefsetzen des Kanals 2 wird einem Umschalter 52 für die Stromrichtung zugeleitet, der das Signal entweder dem Signal 41 zum Tiefsetzen von Kanal 2 in positiver Stromrichtung aufschaltet oder dem Signal 43 zum Tiefsetzen von Kanal 2 in negativer Stromrichtung.

Das Signal aus dem Komparator 50 für das Hochsetzen des Kanals 2 wird einem Umschalter 52 für die Stromrichtung zugeleitet, der das Signal entweder dem Signal 42 zum Hochsetzen von Kanal 2 in negativer Stromrichtung aufschaltet oder dem Signal 44 zum Hochsetzen von Kanal 2 in positiver Stromrichtung.

Die Umschalter 52 für die Stromrichtung werden von einer Umschaltung 51 der Stromrichtung eingestellt, welche Umschaltung 51 wiederum das Signal des Stromsollwerts 31 erhält.

### Bezugszeichenliste:

- 1: Eingangskondensator
- 2: Ausgangskondensator
- 3: Induktivität
- 4: Induktivität
- 5: Regelgröße Strom-Istwert Drosselstrom
- 6: Regelgröße Strom-Istwert Drosselstrom
- 7: Tiefsetz-Schaltelement
- 8: Hochsetz-Schaltelement
- 9: Tiefsetz-Schaltelement
- 10: Hochsetz-Schaltelement
- 11: Tiefsetz-Schaltelement
- 12: Hochsetz-Schaltelement
- 13: Tiefsetz-Schaltelement
- 14: Hochsetz-Schaltelement
- 15: erste Leistungs-Schnittstelle
- 16: erste Leistungs-Schnittstelle
- 17: zweite Leistungs-Schnittstelle
- 18: zweite Leistungs-Schnittstelle
- 19: Punkt im Strom-Zeit-Diagramm
- 20: Punkt im Strom-Zeit-Diagramm
- 21: Punkt im Strom-Zeit-Diagramm
- 22: Punkt im Strom-Zeit-Diagramm
- 23: Punkt im Strom-Zeit-Diagramm
- 24: Stromschwelle Hochsetzsteller-EIN
- 25: Stromschwelle Tiefsetzsteller-EIN
- 26: Stromschwelle Hochsetzsteller-AUS
- 27: Stromschwelle Tiefsetzsteller-AUS
- 28: gleichphasiger Stromverlauf
- 29: Veränderung der Hysterese
- 30: phasenverschobener Stromverlauf
- 31: Stromsollwert
- 32: Stromschwellenversatz zwischen Hochsetzen und Tiefsetzen
- 33: Hysterese des Stromreglers
- 34: Sollwert Phasenverschiebung zwischen mehreren Kanälen
- 35: Strom-Istwert Kanal 1
- 36: Strom-Istwert Kanal 2
- 37: Signal Tiefsetzen Kanal 1 positive Stromrichtung
- 38: Signal Hochsetzen Kanal 1 negative Stromrichtung
- 39: Signal Tiefsetzen Kanal 1 negative Stromrichtung
- 40: Signal Hochsetzen Kanal 1 positive Stromrichtung
- 41: Signal Tiefsetzen Kanal 2 positive Stromrichtung
- 42: Signal Hochsetzen Kanal 2 negative Stromrichtung
- 43: Signal Tiefsetzen Kanal 2 negative Stromrichtung
- 44: Signal Hochsetzen Kanal 2 positive Stromrichtung
- 45: Addierer Stromschwellenversatz zwischen Hochsetzen und Tiefsetzen
- 46: Sollwertkorrektur zwischen Hochsetzen und Tiefsetzen
- 47: Komparator Kanal 1 Tiefsetzen (Zweipunktregler)
- 48: Komparator Kanal 1 Hochsetzen (Zweipunktregler)
- 49: Komparator Kanal 2 Tiefsetzen (Zweipunktregler)
- 50: Komparator Kanal 2 Hochsetzen (Zweipunktregler)
- 51: Umschaltung Stromrichtung
- 52: Umschalter Stromrichtung
- 53: Phasenkomparator (Phasenregelschleife)
- 54: Differenzbildung Soll/Ist Phasenverschiebung (Phasenregelschleife)
- 55: Summierung Hysterese von Kanal 1 zum Kanal 2
- 56: Hysterese für Kanal 2
- 57: Hysterese für Kanal 1
- 58: Inverter
- 59: RS Flipflop

- I: Strom
- M: Master
- t: Zeit
- S: Slave

## Patentansprüche

1. Verfahren zum Betrieb eines Gleichspannungswandlers mit mehreren Leistungsteilzweigen (3,5,7-10; 4,6,11-14), **dadurch gekennzeichnet, dass** die Leistungsteilzweige mittels Zweipunktregler (47,48,49,50) geregelt werden und die Zweipunktregler unterschiedlicher Leistungsteilzweige miteinander synchronisiert werden.

2. Verfahren nach Anspruch 1, **dadurch gekennzeichnet, dass** die Zweipunktregler (47,48,49,50) mittels Phasenregelschleife (53,54) miteinander synchronisiert werden.

3. Verfahren nach Anspruch 1 oder 2, **dadurch gekennzeichnet, dass** bei der Synchronisierung eine Hysterese (56) von zumindest einem Zweipunktregler verändert (29) wird.

4. Verfahren nach Anspruch 3, **dadurch gekennzeichnet, dass** die Hysterese (57) des Zweipunktreglers eines ersten Leistungsteilzweigs (3,5,7-10) konstant gehalten wird, während die Hysterese (56) des Zweipunktreglers von zumindest einem weiteren Leistungsteilzweig (4,6,11-14) so eingestellt wird, dass der Stromverlauf des weiteren Leistungsteilzweigs (4,6,11-14) phasenverschoben (30) zum Stromverlauf des ersten Leistungsteilzweigs (3,5,7-10) ist.

5. Verfahren nach einem der Ansprüche 1 bis 4, **dadurch gekennzeichnet, dass** für zumindest einen bestimmten Leistungsteilzweig (3,5,7-10; 4,6,11-14) die Schaltschwelle des Zweipunktreglers für das Tiefsetzen gegenüber einer Schaltschwelle des Zweipunktreglers für das Hochsetzen um einen Stromschwellenversatz (32) versetzt ist.

6. Vorrichtung zur Durchführung eines Verfahrens nach einem der Ansprüche 1 bis 5, umfassend einen Gleichspannungswandler mit mehreren Leistungsteilzweigen (3,5,7-10; 4,6,11-14) und zumindest zwei Zweipunktreglern, **dadurch gekennzeichnet, dass** die Zweipunktregler (47,48,49,50) unterschiedlicher Leistungsteilzweige über eine Synchronisierungseinrichtung miteinander verbunden sind.

7. Vorrichtung nach Anspruch 6, **dadurch gekennzeichnet, dass** die Synchronisierungseinrichtung eine Phasenregelschleife (53,54) enthält.

8. Vorrichtung nach Anspruch 6 oder 7, **dadurch gekennzeichnet, dass** die Synchronisierungseinrichtung so ausgebildet ist, dass bei der Synchronisierung eine Hysterese (56) von zumindest einem Zweipunktregler verändert (29) wird.

9. Vorrichtung nach Anspruch 8, **dadurch gekennzeichnet, dass** die Synchronisierungseinrichtung so ausgebildet ist, dass die Hysterese (57) des Zweipunktreglers eines ersten Leistungsteilzweigs (3,5,7-10) konstant gehalten wird, während die Hysterese (56) des Zweipunktreglers von zumindest einem weiteren Leistungsteilzweig (4,6,11-14) so eingestellt wird, dass der Stromverlauf des weiteren Leistungsteilzweigs (4,6,11-14) phasenverschoben (30) zum Stromverlauf des ersten Leistungsteilzweigs (3,5,7-10) ist.

10. Vorrichtung nach einem der Ansprüche 6 bis 9, **dadurch gekennzeichnet, dass** für zumindest einen bestimmten Leistungsteilzweig (3,5,7-10; 4,6,11-14) eine Hysterese des Zweipunktreglers für das Tiefsetzen gegenüber einer Hysterese des Zweipunktreglers für das Hochsetzen versetzt ist.
